# EUROPÄISCHE PATENTANMELDUNG

(11) **EP 0 617 506 A1**
(43) Veröffentlichungstag der Anmeldung: **28.09.1994**
(21) Anmeldenummer: 93104789.8
(22) Anmeldetag: 23.03.1993
(51) Int. Cl.: H02P 8/00

(54) **Verfahren zur Ansteuerung eines Schrittmotors**

(71) Anmelder: SIEMENS AKTIENGESELLSCHAFT, D-80333 München (DE)
(72) Erfinder: Udo, Frinzel, Dipl.-Ing. (FH), W-8411 Grünthal (DE)

(57) **Zusammenfassung**

Die vorliegende Erfindung bezieht sich auf die Ansteuerung eines Schrittmotors (4) mit einer Sollwerteingabeeinheit (1), einer Steuereinheit (2) und einer Endstufeneinheit (3), die untereinander nacheinander verbunden sind. Aufgabe ist es, ein Blockieren des Schrittmotors (4) zu verhindern, wenn die Steuereinheit (2) ausfällt. Dies geschieht durch Zwischenschalten einer Dynamikstufe (5) zwischen Steuereinheit (2) und Endstufeneinheit (3), die nach einem kurzen Zeitintervall bzw. zeitgleich nach einer Vorinformation an die Steuereinheit (2) eine invertierte Information an die Endstufeneinheit (3) ausgibt, wobei bei ausbleibender Reaktion der Steuereinheit (2) aufgrund der genügend oberhalb der elektrischen Eckfrequenz der Schrittmotorwicklungen sich der resultierende Feldvektor zu Null ergibt.
Anwendbar insbesondere bei der Drosselklappensteuerung in der Kraftfahrzeugtechnik

## Beschreibung

Die Erfindung betrifft ein Verfahren zur Ansteuerung eines Schrittmotors nach dem Oberbegriff des Patentanspruchs 1.

Ein Schrittmotor stellt wegen seiner komplexen Ansteuerung, d.h. einer für die Bewegung notwendigen dynamischen Drehfeldgenerierung einen hohen Anteil an Eigensicherheit bereit. Aus diesem Grund sind zufällige Bewegungen durch Bauteileausfälle bzw. Systemausfälle ausgeschlossen, wenn die momentanen Stromzeiger (immer zwei Stromzeiger bilden einen resultierenden Feldvektor) aufrecht erhalten bleiben. Dies führt dann zu einer elektrischen Selbsthemmung des Schrittmotors.

Wird nun der Schrittmotor zur Ansteuerung beispielsweise einer Drosselklappe in Kraftfahrzeugen eingesetzt, so führt die elektrische Selbsthemmung dazu, daß die Drosselklappe in ihrer Stellung verharrt und nicht mehr durch die Rückstellfeder geschlossen werden kann. Ein derartiges Vorkommnis ist insbesondere bei Kraftfahrzeugen nicht tragbar.

Es ist Aufgabe der Erfindung, ein Verfahren aufzuzeigen, durch das eine elektrische Selbsthemmung bei Ausfall der Ansteuerung verhindert wird.

Die Aufgabe wird erfindungsgemäß durch den Patentanspruch gelöst.

Eine herkömmliche Ansteuerung eines Schrittmotors ist in der Fig. 4 dargestellt. Danach besteht die Ansteuerung eines Schrittmotors 4 zunächst aus einer Sollwerteingabeeinheit 1, die bei einem Kraftfahrzeug durch einen Pedalwertgeber gebildet sein kann. Die Information der Sollwerteingabeeinheit kann digitaler oder analoger Art sein und wird einer Steuereinheit 2 zugeführt, die je nach Art der Endstufeneingangsschnittstelle ein digitales Phasensignal und einen analogen Stromwert oder eine rein digitale Bitmustersequenz an eine Endstufeneinheit 4 ausgibt, die dann einen Feldvektor an einen Schrittmotor 4 ausgibt. Ein derartiges in Fig. 4 dargestelltes Antriebskonzept ist bei Ausfall der Steuereinheit 2 eigensicher in Bezug auf unkontrolliertes aktives Bewegen des Schrittmotors, da als Folge davon die aktuelle Endstufenansteuerung je nach Art des Ausfalls entweder abgeschaltet oder "eingefroren" wird. Dabei kommt es darauf an, wie die Stufe ausfällt. Sie kann so ausfallen, daß sie ihren aktuell ausgegebenen Wert einfach einfriert, wenn z.B. nur die Rechnereinheit in der Steuereinheit 2 defekt ist, aber die Peripherie nach wie vor funktionstüchtig ist. Dann wird die Peripherie einfach nicht mehr aktualisiert und der Zeiger friert ein. Es kann aber auch sein, daß der Baustein im weitesten Sinne explodiert, d.h. , daß er sich beispielsweise aus dem Sockel löst. Dann werden die Ausgangstreiber der Steuereinheit 2 abgeschaltet und liefern kein Signal mehr. Durch letzteres Vorkommnis verharrt der Schrittmotor ebenfalls in seiner Drehstellung. Dies ist, wie eingangs ausgeführt, insbesondere bei einer Drosselklappensteuerung durch einen Schrittmotor nicht tragbar, da eine Rückstellung der Drosselklappe in ihre Ausgangsstellung dann nicht mehr möglich ist.

Eine Abhilfe bringt erfindungsgemäß die zwischen der Steuereinheit und der Endstufeneinheit angeordnete Dynamikstufe, die das Vorzeichen des Signalflusses laufend invertiert, d.h., sie invertiert nicht die gesamte Information, sondern nur den Stromzeiger, so daß bei Ausfall der Steuereinheit aufgrund der dynamischen Invertierung bei einer ausreichend hohen Frequenz der Wechselbestromung die elektrische Selbsthemmung des Schrittmotors aufgehoben wird, da der Mittelwert der Einzelströme und damit der Mittelwert des resultierenden Feldvektors Drehmoments zu Null wird, so daß sich ein Strom erst garnicht in den Wicklungen des Schrittmotors aufbauen kann.

Im folgenden sei die Erfindung anhand von vier Figuren näher erläutert, wobei gleiche Baueinheiten mit den gleichen Bezugszeichen versehen sind.

Es zeigen
Fig. 1 ein Blockschaltbild eines Schrittmotorantriebskonzeptes nach der Erfindung;
Fig. 2 eine Vektordarstellung;
Fig. 3 ein Zeitablaufdiagramm der Information zwischen der Steuereinheit und der Enstufeneinheit, wobei Fig. 3A den zeitlichen Zusammenhang bei einer ordnungsgemäß arbeitenden Steuerung und Fig. 3B den Zusammenhang bei einer nicht ordnungsgemäß arbeitenden Steuerung zeigt; und
Fig. 4 ein herkömmliches Schrittmotorantriebskonzept.

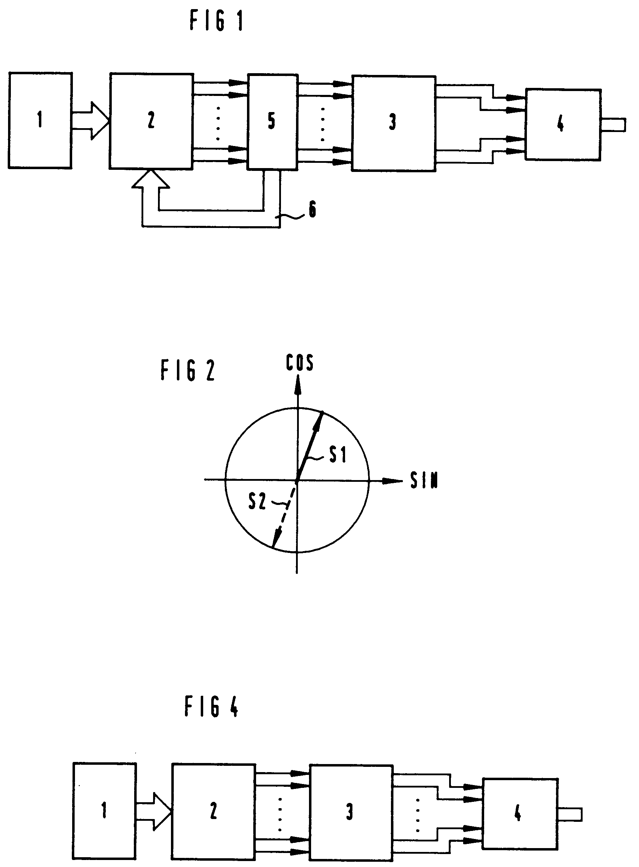

Das in Fig. 1 dargestellte Schrittmotorantriebskonzept besteht aus einer Sollwerteingabeeinheit 1, einer nachgeschalteten Steuereinheit 2, einer darauffolgenden Dynamikstufe 5, einer folgenden Endstufeneinheit 3 und schließlich einem sich daran anschließenden Schrittmotor 4. Die Einheiten 1,2,3,4 stehen untereinander wie eingangs in Fig. 4 beschrieben in Verbindung. Die Dynamikstufe 5 ist zwischen der Steuereinheit 2 und der Endstufeneinheit 3 geschaltet und weist eine Signalleitung 6 auf, die an die Steuereinheit 2 zurückgeführt ist.

Das System arbeitet wie folgt:
Zunächst sei angenommen, daß die Sollwerteingabeeinheit 1 einen konstanten Sollwert ausgibt und das System ordnungsgemäß arbeitet. Demzufolge hat die Steuerung 2 eine bestimmte, dem Sollwert entsprechende Lage am Schrittmotor 4 eingestellt, d.h. das System ist eingeschwungen.

Die Dynamikstufe 5 arbeitet von der Steuereinheit 2 unabhängig und kündigt dieser periodisch eine Invertierung des von der Steuereinheit 2 ausgegebenen Ansteuersignals über die Signalleitung 6 an. Dies erfolgt beispielsweise durch Ausgabe eines definierten Impulses bzw. durch einen einfachen Pegelwechsel oder eine Flankentriggerung.

Diese Ankündigung von der Dynamikstufe 5 wird in der Steuereinheit 2 registriert und von dieser als Ankündigung, daß gleich danach eine Invertierung von der Dynamikstufe vorgenommen wird, erkannt. Als Reaktion nimmt die Steuereinheit 2 eine präventive Vorinvertierung des Ansteuersignals vor. Zusammen mit dieser präventiven d.h. zeitlich vorauslaufenden Vorinvertierung und der von der Dynamikstufe ausgeführten Invertierung wird nun eine doppelt invertierte Information von der Dynamikstufe 5 ausgegeben d.h. die richtige Information für die Endstufeneinheit 3, so daß der Schrittmotor weiterhin ordnungsgemäß angesteuert wird.

Nun sei angenommen, daS die Steuereinheit 2 in der Art und Weise ausgefallen ist, daß deren Ausgangssignale weiter anstehen, also eingeforen sind und der Sollwert weiterhin konstant ist, um die Erklärung des Verfahrens weiterhin zu erleichtern. Die Dynamikstufe 5 kündigt nun wiederum an, daß sie in Kürze das Vorzeichen des Signalflusses invertiert. Da nun die Steuereinheit 2 nicht mehr arbeitsfähig ist, erkennt sie die Ankündigung der bevorstehenden Invertierung des nunmehr "eingefrorenen" Ansteuersignals nicht, d.h. sie reagiert nicht und gibt keine präventive Vorinvertierung aus. Nunmehr folgt auf die Ankündigung die Invertierung der anliegenden "eingefrorenen" Information durch die Dynamikstufe 5. Ein schneller Ablauf der Invertierung bewirkt, daß der Mittelwert der Ansteuerströme und dadurch der resultierende Feldvektor zu Null wird, wodurch beim Beispiel der Drosselklappe diese durch die Rückstellfeder in ihre Schließstellung gebracht werden kann.

Die in Fig. 2 gezeigte Darstellung zeigt den Stromzeiger zur Ansteuerung des Schrittmotors in Einheitskreisdarstellung. Die waagerechte Achse soll die Sinusachse, die senkrechte Achse die Cosinusachse sein. Im ersten Quadranten befindet sich der Summenstromzeiger (Feldvektor) S1, der bei Ausfall der Steuereinheit dynamisch invertiert wird, wie der Summenstromzeiger (Feldvektor) S2 im dritten Quadranten zeigt, so daß die Schrittmotorwicklungen eine Wechselbestromung erfahren (180 Grad - Sprünge der Summenstromzeiger). Die Frequenz dieser Wechselbestromung ist genügend hoch oberhalb der elektrischen Eckfrequenz, so daß sich wie gewünscht der resultierende Feldvektor zu Null ergibt.

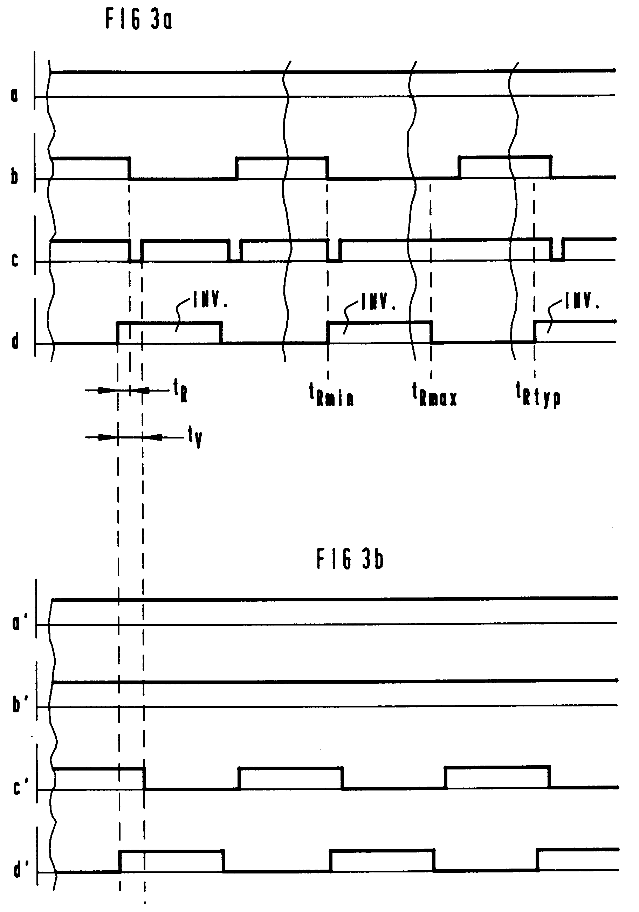

In Fig. 3A und 3B sind die in Fig. 1 beschriebenen Zusammenhänge nochmals anhand eines Zeitablaufdiagramms dargestellt, wobei in Fig. 3A die Situation dargestellt ist, bei der die Steuerung 2 ordnungsgemäß arbeitet und in Fig. 3B die Situation, wo die Steuerung 2 defekt ist.

Die in Fig. 3A dargestellten Kennlinien a - d zeigen folgende Zusammenhänge und zwar bei vier verschiedenen Reaktionszeiten t_{R} der Steuerung 2 auf die Ankündigung, wobei "a" das interne Rechenergebnis der Steuerung zeigt, d.h., die Steuerung gibt einen konstanten Sollwert aus; "b" den Verlauf des Ausgangssignals der Steuerung 2 zeigt, das dem Eingangssignal der Dynamikstufe 5 entspricht; "c" das Ausgangssignal der Dynamikstufe 5 zeigt, das dem Ansteuersignal der Endstufe 3 entspricht; und "d" den Verlauf des Vorankündigungssignals der Dynamikstufe 5 an die Steuerung 2 zeigt.

Da die unter Fig. 1 ausgeführte Beschreibung auf diese Kennlinien lesbar ist, wird, um Wiederholungen zu vermeiden, auf die dortigen Ausführungen verwiesen.

In Fig. 3B soll der Fall anhand von Kennlinien a' - d' gezeigt werden, bei der die Steuerung nicht ordnungsgemäß arbeitet. Die obigen Ausführungen bezüglich a - d gelten ebenfalls für a' - d'. Man kann daraus erkennen, daß bei einem eingefrorenen Ausgangssignal der Steuerung 2 die Endstufe 3 gemäß der Kennlinie c' so angesteuert wird, daß bei genügend schneller Invertierung der resultierende Feldvektor zu Null wird.

## Patentansprüche

1. Verfahren zur Ansteuerung eines Schrittmotors (4) mit einer Sollwerteingabeeinheit (1), einer Steuereinheit (2), einer Endstufeneinheit (3) und einem Schrittmotor (4), die untereinander nacheinander über Übertragungsleitungen verbunden sind,
**dadurch gekennzeichnet,** daß
- eine Dynmikstufe (5) vorgesehen ist, die vollkommen unabhängig von der Steuereinheit (2) arbeitet, wobei
- die Dynakikstufe (5) zwischen der Steuereinheit (2) und der Endstufeneinheit (3) vorgesehen ist und eine Vorinformation bzw. zeitgleiche Information an die Steuereinheit (2) abgibt, daß diese eine gegenüber der aktuellen, an der Dynamikstufe (5) anliegenden Information invertierte Information an die Endstufeneinheit ausgeben wird, wobei als Reaktion darauf eine ordnungsgemäß arbeitende Steuereinheit (2) eine präventive Vorinvertierung der Information vornimmt,
- nach einem kurzen Zeitintervall bzw. zeitgleich die Dynamikstufe die durch die Vorinformation angekündigte invertierte Information an die Endstufeneinheit (3) ausgibt, wobei
- bei ausbleibender Reaktion der Steuereinheit (2) aufgrund der genügend oberhalb der elektrischen Eckfrequenz der Schrittmotorwicklungen gewählten Invertierfrequenz sich der resultierende Feldvektor aus der eingefrorenen Phasen- und Strominformation zu Null ergibt.
